# EUROPEAN PATENT APPLICATION

(11) **EP 4 513 605 A1**
(43) Date of publication of application: **26.02.2025**
(21) Application number: 23863406.7
(22) Date of filing: 31.08.2023
(51) Int. Cl.: H01M 10/04

(54) **ELECTRODE ASSEMBLY MANUFACTURING APPARATUS AND MANUFACTURING METHOD USING THE SAME**

(30) Priority: 05.09.2022 KR 20220112122; 22.08.2023 KR 20230109585
(71) Applicant: LG Energy Solution, Ltd., Seoul 07335 (KR)
(72) Inventor: KEUM, Dongyeon, Daejeon 34122 (KR); HWANG, Taemin, Daejeon 34122 (KR); SO, Heeyoung, Daejeon 34122 (KR)
(74) Representative: Plasseraud IP
(86) International application number: PCT/KR2023/012944
(87) International publication number: WO 2024/053930

(57) **Abstract**

An electrode assembly manufacturing apparatus according to an embodiment of the present disclosure includes: a first electrode-separator assembly supply unit that supplies a first electrode-separator assembly including a plurality of first electrode pieces located between sheet-like separators facing each other, a second electrode supply unit that supplies second electrode pieces laminated to be located on the outer side surface of the separator of the first electrode-separator assembly, a stack unit on which an electrode assembly formed by laminating the first electrode-separator assembly and the second electrode piece is seated, and a holding unit that holds the second electrode piece from the second electrode supply unit and moves the second electrode piece.

## Description

### [TECHNICAL FIELD]

### Cross Citation with Related Application(s)

This application claims the benefit of Korean Patent Application No. 10-2022-0112122 filed on September 5, 2022 and Korean Patent Application No. 10-2023-0109585 filed on August 22, 2023 in the Korean Intellectual Property Office, the disclosures of which are incorporated herein by reference in their entirety.

The present disclosure relates to an electrode assembly manufacturing apparatus and a manufacturing method using the same, and more particularly, to an electrode assembly manufacturing apparatus with improved productivity and a manufacturing method using the same.

### [BACKGROUND]

In modem society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

The secondary battery may be classified based on the shape of a battery case into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet type positive electrodes and long sheet type negative electrodes are rolled with a separator being interposed therebetween, a stacked (laminated) type structure in which pluralities of positive electrodes and negative electrodes, cut into predetermined unit sizes, are sequentially stacked with separators being interposed therebetween, or the like. In recent years, in order to solve problems caused by the jelly-roll type electrode assembly and the stacked type electrode assembly, there has been developed a stack/folding type electrode assembly, which is a combination of the jelly-roll type electrode assembly and the stacked type electrode assembly.

Meanwhile, in manufacturing a stacked type electrode assembly and a stack/folding type electrode assembly, conventionally, a method of preparing a plurality of bi-cells formed by sequentially laminating a negative electrode, a separator, and a positive electrode, laminating them, or attaching them to a sheet-like separator and then folding the sheet-like separator in one direction was used. However, such a conventional structure not only has complicated manufacturing procedures because the bi-cells are prepared in advance, and then attached onto the sheet-like separator and laminated, but also have a problem that an unnecessary gap space is created between the electrode and the separator because several layers of sheet-like separators are disposed on the side surface of the final battery cell.

Furthermore, conventionally, in addition to such a lamination method, a manufacturing method of an electrode assembly using a zig-zag lamination method has also been used. The zig-zag lamination method is an electrode assembly lamination method in which the positive electrode and the negative electrode are alternately inserted during the process in which the separator unwound from a wound roll moves from one side to the other side and from the other side to one side. However, in the case of the conventional zigzag lamination method, there is a problem that the cut electrodes must be stored separately, and there is a risk that the inserted electrodes may move during the lamination process. In addition, when producing long battery cells, it is difficult to control the tension of the separator and the progress speed is slow, so that not only the manufacturing efficiency is reduced but also there is a limit to improving productivity,

Therefore, there is a need to develop a new electrode assembly manufacturing apparatus and method that can improve the manufacturing efficiency and productivity of the above-described stacked type or stack/folded type electrode assembly, and improve product durability and stability.

### [DETAILED DESCRIPTION OF THE INVENTION]

### [Technical Problem]

It is an object of the present disclosure to provide an electrode assembly manufacturing apparatus and a manufacturing method using the same that can improve manufacturing efficiency, product quality, and productivity as compared to conventional electrode assembly manufacturing processes.

The objects of the present disclosure are not limited to the foregoing objects, and any other objects and advantages not mentioned herein should be clearly understood by those skilled in the art from the following description and the accompanying drawing.

### [Technical Solution]

According to one embodiment of the present disclosure, there is provided an electrode assembly manufacturing apparatus comprising: a first electrode-separator assembly supply unit that supplies a first electrode-separator assembly including a plurality of first electrode pieces located between sheet-like separators facing each other, a second electrode supply unit that supplies second electrode pieces laminated to be located on the outer side surface of the separator of the first electrode-separator assembly, a stack unit on which an electrode assembly formed by laminating the first electrode-separator assembly and the second electrode piece is seated, and a holding unit that holds the second electrode piece from the second electrode supply unit and moves the second electrode piece.

The second electrode supply unit includes a 2-1 st electrode supply unit and a 2-2nd electrode supply unit, and the stack unit may be disposed between the 2-1st electrode supply unit and the 2-2nd electrode supply unit.

The stack unit may move between the 2-1st electrode supply unit and the 2-2nd electrode supply unit.

The stack unit may move on a straight line that forms the shortest distance between the 2-1st electrode supply unit and the 2-2nd electrode supply unit.

The holding unit may move between the second electrode supply unit and the stack unit.

The holding unit holds the second electrode piece from the second electrode supply unit adjacent to the holding unit, and moves the held second electrode piece to the stack unit, and the stack unit that has received transmission of the held second electrode piece may move in order to laminate the first electrode-separator assembly on the stack unit.

The stack unit moves to be adjacent to the second electrode supply unit that is located farther from the stack unit among the plurality of second electrode supply units in order to laminate the first electrode-separator assembly, and the stack unit may be moved to be adj acent to the second electrode supply unit to thereby locate the first electrode-separator assembly on the uppermost second electrode piece of the stack unit.

The first electrode-separator assembly is in a state in which the first electrode piece is laminated between the sheet-like separators.

The first electrode may be a negative electrode, and the second electrode may be a positive electrode.

According to another embodiment of the present disclosure, there is provided a manufacturing method of an electrode assembly, comprising the steps of: forming a first electrode-separator assembly that includes two sheet-like separators, and a plurality of first electrode pieces continuously located between inner side surfaces of the sheet-like separators facing each other; disposing the first electrode-separator assembly in a stack unit; laminating a second electrode piece on the outer side surface of the separator of the first electrode-separator assembly disposed in the stack unit; and allowing the stack unit to move and laminating the first electrode-separator assembly on the laminated second electrode piece.

The step of laminating a second electrode piece on the outer side surface of the separator of the first electrode-separator assembly disposed in the stack unit may be a step in which a holding unit holds a second electrode piece from a second electrode supply unit, and the held second electrode piece is laminated on the first electrode-separator assembly disposed in the stack unit.

The stack unit may be located between the 2-1st electrode supply unit and the 2-2nd electrode supply unit.

The step of allowing the stack unit to move and laminating the first electrode-separator assembly on the laminated second electrode piece may be a step in which the stack unit moves between the 2-1st electrode supply unit and the 2-2nd electrode supply unit, and the first electrode-separator assembly is laminated on the uppermost second electrode piece of the stack unit.

### [Advantageous Effects]

According to embodiments, an electrode assembly manufacturing apparatus of the present disclosure and a manufacturing method using the same form a negative electrode-separator assembly in advance, and alternately laminates the negative electrode-separator assembly and the positive electrode piece, thereby improving productivity.

Effects obtainable from the present disclosure may be not limited by the above mentioned effect. And, other unmentioned effects can be clearly understood from the following description and the accompany drawings by those having ordinary skill in the technical field to which the present disclosure pertains.

### [BRIEF DESCRIPTION OF THE DRAWINGS]

FIGS. 1 and 2 are side views of an electrode assembly manufacturing apparatus according to an embodiment of the present disclosure;
FIG. 3 is a diagram showing a manufacturing method of a negative electrode-separator assembly that is inserted in an electrode assembly manufacturing apparatus according to an embodiment of the present disclosure;
FIG. 4 is a side view showing a negative electrode-separator assembly manufactured through the manufacturing method of FIG. 3;
FIG. 5 is a side view showing the electrode assembly of a section A of FIG. 2, which is an electrode assembly manufactured by an electrode assembly manufacturing apparatus according to an embodiment of the present disclosure;
FIG. 6 is a side view of an electrode assembly manufacturing apparatus according to a comparative example; and
FIG. 7 is a side view showing an electrode assembly manufactured by an electrode assembly manufacturing apparatus according to a comparative example.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, an electrode assembly manufacturing apparatus according to an embodiment of the present disclosure will be described.

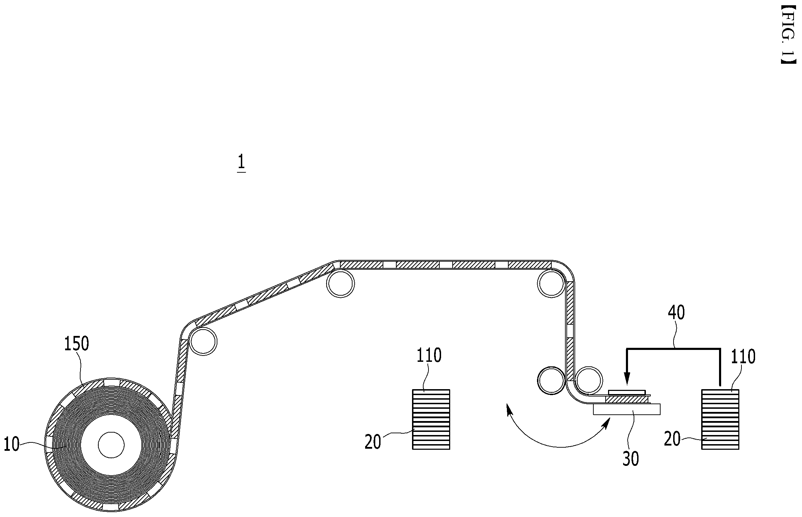

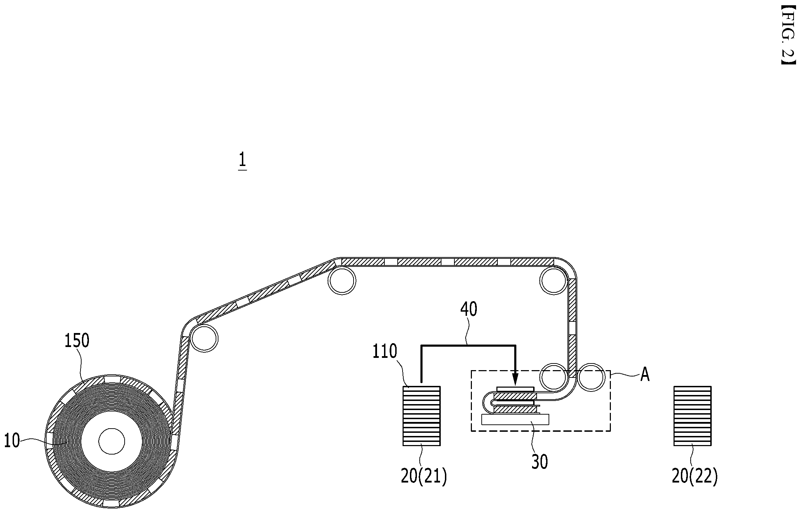

FIGS. 1 and 2 are side views of an electrode assembly manufacturing apparatus according to an embodiment of the present disclosure.

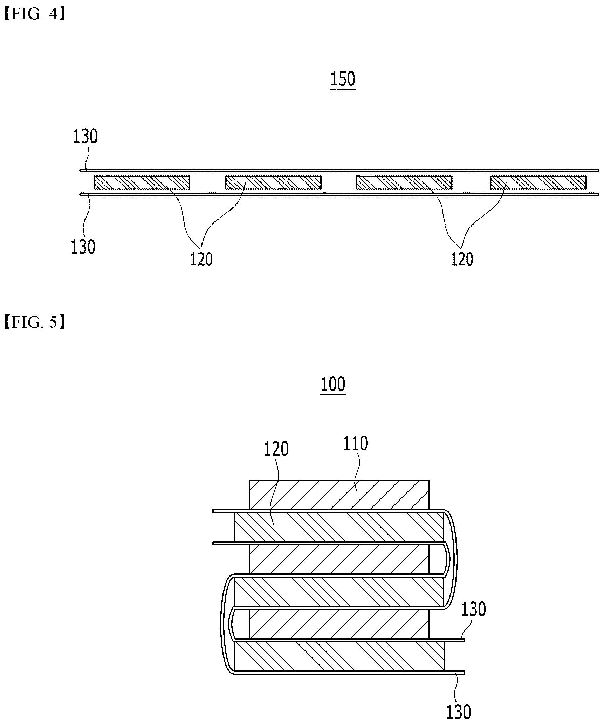

Referring to FIGS. 1 and 2, an electrode assembly manufacturing apparatus 1 according to the present embodiment may comprise a negative electrode-separator assembly supply unit 10 that supplies a negative electrode-separator assembly 150 including two sheet-like separators 130 as shown in FIG. 4, and a plurality of negative electrode pieces 120 located between sheet-like separators 130 facing each other, a positive electrode supply unit 20 that supplies positive electrode pieces 110 laminated to be located on the outer side surface of the separator 130 of the negative electrode-separator assembly 150 supplied from the negative electrode-separator assembly supply unit 10, a stack unit 30 on which an electrode assembly 100 formed by laminating the negative electrode-separator assembly 150 and the positive electrode piece 110 is seated, and a holding unit 40 that holds the positive electrode piece 110 from the positive electrode supply unit 20, and moves the positive electrode piece 110 toward the stack unit 30.

The positive electrode supply unit 20 may be formed in plural numbers, and as an example, the positive electrode supply unit 20 may include a first positive electrode supply unit 21 and a second positive electrode supply unit 22. Therefore, the positive electrode pieces 110 are supplied from the positive electrode supply units 20 formed in plural numbers, thereby being able to improve the productivity of the electrode assembly 100 of the electrode assembly manufacturing apparatus 1 according to the present embodiment.

At this time, the stack unit 30 may be formed between the positive electrode supply units 20 adj acent to each other among the plurality of positive electrode supply units 20. As an example, the stack unit 30 is formed between the first positive electrode supply unit 21 and the second positive electrode supply unit 22, and may move and/or reciprocate between the first positive electrode supply unit 21 and the second positive electrode supply unit 22. Specifically, the stack unit 30 may move and/or reciprocate on a straight line that forms the shortest distance between the first positive electrode supply unit 21 and the second positive electrode supply unit 22.

The holding unit 40 can move between the positive electrode supply unit 20 and the stack unit 30. Specifically, the holding unit 40 holds the positive electrode piece 110 from the positive electrode supply unit 20 adjacent to the holding unit 40, and moves the held positive electrode piece 110 to the stack unit 30, and can be laminated on the electrode assembly 100 on the stack unit 30. At this time, at the moment when the positive electrode piece 110 is laminated on the electrode assembly 100 of the stack unit 30 by the holding unit 40, the negative electrode-separator assembly 150 may be disposed on the uppermost part of the electrode assembly 100 of the stack unit 30. Therefore, the positive electrode piece 110 may be laminated to be located on the outer side surface of the separator 130 of the negative electrode-separator assembly 140.

The stack unit 30 may laminate the negative electrode-separator assembly 150 on the stack unit 30 or on the positive electrode piece 110 while moving between the first positive electrode supply unit 21 and the second positive electrode supply unit 22.

That is, as mentioned above, the stack unit 30 can receive transmission of the positive electrode piece 110 from the holding unit 40 while moving between the first positive electrode supply unit 21 and the second positive electrode supply unit 22. At this time, the stack unit 30 that has received transmission of the held positive electrode piece 110 may move in order to laminate the negative electrode-separator assembly 150 on the positive electrode piece 110.

More specifically, the stack unit 30 may be moved to be adjacent to the positive electrode supply unit 20 that is located farther from the stack unit 30 among the positive electrode supply units 20 in order to laminate the negative electrode-separator assembly 150. Further, the stack unit 30 is moved to be adjacent to the positive electrode supply unit 20, thereby making it possible to located the negative electrode-separator assembly 150 on the uppermost positive electrode piece 110 of the stack unit 30.

As an example, referring to FIG. 2, the stack unit 30 is located closer to the first positive electrode supply unit 21 and can receive supply of the positive electrode piece 110 from the first positive electrode supply unit 21. Subsequently, the stack unit 30 is moved so as to be located adjacent to the second positive electrode supply unit 22 that is located farther from the stack unit 30 among the positive electrode supply units 20 in order to laminate the negative electrode-separator assembly 150. That is, it can be moved similarly to the position of the stack unit 30 in FIG. 1. Further, the stack unit 30 is moved to be adjacent to the second positive electrode supply unit 22, thereby making it possible to locate the negative electrode-separator assembly 150 on the uppermost positive electrode piece 110 of the stack unit 30.

Therefore, the electrode assembly manufacturing apparatus 1 according to the present embodiment supplies the negative electrode-separator assembly 150, thereby forming a plurality of positive electrode supply units 20, and the stack unit 30 laminates the positive electrode pieces 110 on the negative electrode-separator assembly 150 while moving between the plurality of positive electrode supply units 20, thereby being able to improve the productivity as compared to a conventional electrode assembly manufacturing apparatus.

Next, the negative electrode-separator assembly supplied to the electrode assembly manufacturing apparatus according to the present embodiment and the electrode assembly manufactured by the electrode assembly manufacturing apparatus according to the present embodiment will be described.

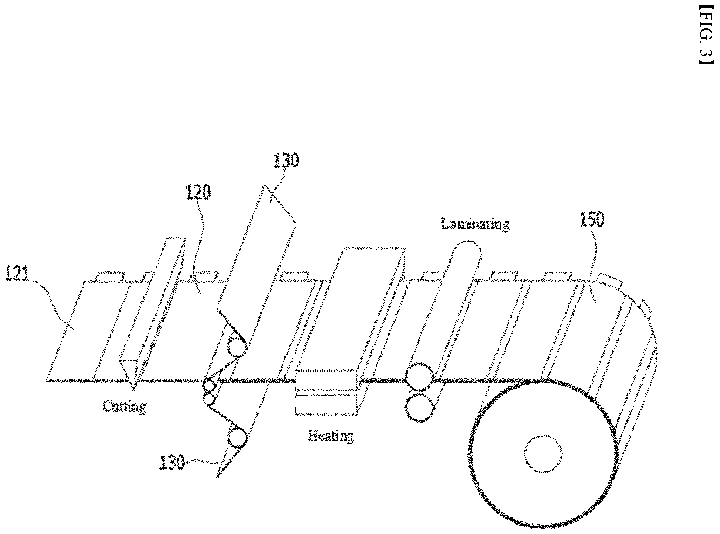

FIG. 3 is a diagram showing a manufacturing method of a negative electrode-separator assembly that is inserted in an electrode assembly manufacturing apparatus according to an embodiment of the present disclosure. FIG. 4 is a side view showing a negative electrode-separator assembly manufactured through the manufacturing method of FIG. 3. FIG. 5 is a side view showing the electrode assembly of a section A of FIG. 2, which is an electrode assembly manufactured by an electrode assembly manufacturing apparatus according to an embodiment of the present disclosure.

The negative electrode-separator assembly 150 that is inserted into the electrode assembly manufacturing apparatus 1 according to an embodiment of the present disclosure may be formed by laminating a long sheet-like separator 130 and a negative electrode piece 120.

At this time, referring to FIG. 3, in the process of forming the negative electrode-separator assembly 150, the long sheet-like negative electrode sheet 121 is inserted into the negative electrode-separator assembly manufacturing apparatus, and then the negative electrode sheet 121 may be cut to form the negative electrode piece 120, but is not limited thereto, and the negative electrode piece 120 itself may be inserted.

On the other hand, the separator 130 may be provided as two long sheet-like separators 130.

Therefore, as shown in FIG. 4, the negative electrode-separator assembly 150 may be formed in a state where a plurality of negative electrode pieces 120 are interposed between the inner side surfaces of the two separators 130 facing each other. At this time, the plurality of negative electrode pieces 120 interposed between the separators 130 may be arranged at intervals from each other in the longitudinal direction of the separator 130 (the horizontal direction in FIG. 4).

In addition, a heating and laminating process is further performed in order to form the negative electrode-separator assembly 150, thereby being able to form a final negative electrode-separator assembly 150. Therefore, the separator 130 and the negative electrode piece 120 may be joined to each other, and make it possible to form a more robust negative electrode-separator assembly 150 and electrode assembly 100.

Further, the electrode assembly 100 manufactured by supplying the above-mentioned negative electrode-separator assembly 150 to the electrode assembly manufacturing apparatus 1 may be manufactured in such a manner that the negative electrode-separator assembly 150 and the positive electrode piece 110 are folded and laminated using a zigzag laminating method.

Specifically, referring to FIG. 5, the electrode assembly 100 can be manufactured by folding the connecting portions formed on the separator 130 in mutually opposite directions. Here, the connecting portion may be a portion where the positive electrode piece 110 or the negative electrode piece 120 is not disposed in the electrode assembly 100, and only the separator 130 is present.

In particular, referring to FIGS. 1 and 2, the stack unit 30 of the electrode assembly manufacturing apparatus 1 according to the present embodiment laminates the negative electrode-separator assembly 150 while moving between the first positive electrode supply unit 21 and the second positive electrode supply unit 22. At this time, the direction of movement from a position adjacent to the first positive electrode supply unit 21 to a position adjacent to the second positive electrode supply unit 22, and the direction of movement from a position adjacent to the second positive electrode supply unit 22 to a position adjacent to the first positive electrode supply unit 21 are opposite to each other, and the connecting portions formed on the separator 130 of the electrode assembly 100 may be folded in mutually opposite directions.

According to the embodiment described above, it has been described that a negative electrode-separator assembly, in which the negative electrode piece is laminated to the separator, is laminated alternately with the positive electrode piece, but an embodiment in which the positive electrode-separator assembly in which the positive electrode piece is laminated onto the separator is alternately laminated with the negative electrode piece can also be possible.

However, in the case of an electrode assembly where the negative electrode is designed to be larger than the positive electrode during the production process, an embodiment in which a negative electrode-separator assembly in which the negative electrode piece is laminated onto the separator is supplied may be more preferable in consideration of the process margin.

Next, an electrode assembly manufacturing apparatus according to a comparative example will be described.

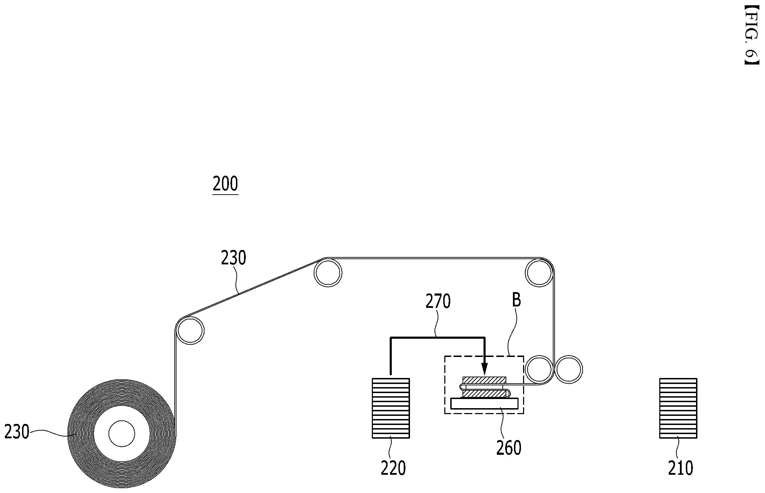

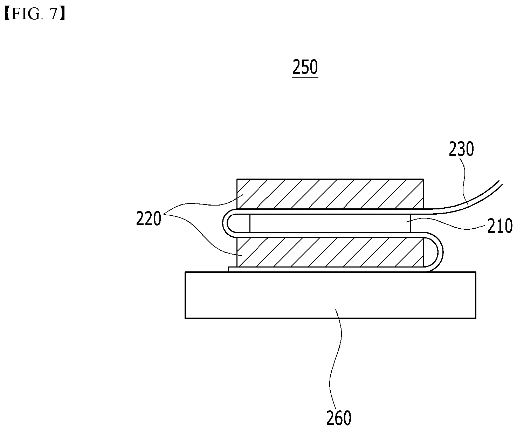

FIG. 6 is a side view of an electrode assembly manufacturing apparatus according to a comparative example. FIG. 7 is a side view showing an electrode assembly manufactured by an electrode assembly manufacturing apparatus according to a comparative example.

Referring to FIGS. 6 and 7, the electrode assembly manufacturing apparatus 200 according to a comparative example may include both a positive electrode supply unit and a negative electrode supply unit into which the separator sheet 230 is inserted and the positive electrode piece 210 and the negative electrode piece 220 are supplied.

Therefore, the stack unit 260 can move between the positive electrode supply unit and the negative electrode supply unit and receive transmission of the positive electrode piece 210 and the negative electrode piece 220 from the holding unit 270 to form the electrode assembly 250.

Further, as the electrode assembly 250 manufactured by the electrode assembly manufacturing apparatus 200 according to the comparative example includes a single sheet separator 230, it can have a structure of an electrode assembly 250 in which the positive electrode piece 210 or the negative electrode piece 220 is disposed around a single separator sheet 230, rather than a structure in which the negative electrode piece 120 is located between two separators 130.

At this time, the conventional electrode assembly manufacturing apparatus 200 has limits in improving production speed because the positive electrode piece 210 and the negative electrode piece 220 must be laminated on the separator 230, respectively.

On the other hand, the electrode assembly manufacturing apparatus 1 according to an embodiment of the present disclosure laminates the positive electrode piece 110 after inserting the negative electrode-separator assembly 150, which makes it possible to secure productivity that is twice as high as that of the conventional electrode assembly manufacturing apparatus 200.

Next, the manufacturing method of an electrode assembly according to another embodiment of the present disclosure will be described.

The manufacturing method of an electrode assembly according to the present embodiment comprises a step of forming a negative electrode-separator assembly 150 that includes two sheet-like separators 130, and a plurality of negative electrode pieces 120 continuously located between inner side surfaces of the separators 130 facing each other; a step of disposing the negative electrode-separator assembly 150 in a stack unit 30; a step of laminating a positive electrode piece 110 on the outer side surface of the separator 130 of the negative electrode-separator assembly 150 disposed in the stack unit 30; and a step of allowing the stack unit 30 to move and laminating the negative electrode-separator assembly 150 on the laminated positive electrode piece 110.

At this time, the step of laminating a positive electrode piece 110 on the outer side surface of the separator 130 of the negative electrode-separator assembly 150 disposed in the stack unit 30 may be a step in which a holding unit 40 holds a positive electrode piece 110 from a positive electrode supply unit 20, and the held positive electrode piece 110 is laminated on the negative electrode-separator assembly 150 disposed in the stack unit 30.

More specifically, the stack unit 30 is located between the first positive electrode supply unit 21 and the second positive electrode supply unit 22, and can move and reciprocate between them, as described above. Therefore, the step of allowing the stack unit 30 to move and laminating the negative electrode-separator assembly 150 on the laminated positive electrode piece 110 may be a step in which the stack unit 30 moves between the first positive electrode supply unit 21 and the second positive electrode supply unit 22, and the negative electrode-separator assembly may be laminated on the uppermost positive electrode piece 110 of the stack unit 30.

Thereby, the manufacturing method of an electrode assembly according to the present embodiment forms the negative electrode-separator assembly 150, receives supply of the positive electrode pieces 110 from a plurality of positive electrode supply units 20, and laminates them, thereby being able to provide a manufacturing method of an electrode assembly with improved productivity.

The invention has been described in detail with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

1: electrode assembly manufacturing apparatus
10: negative electrode-separator assembly supply unit
20: positive electrode supply unit
21, 22: first and second positive electrode supply units
30: stack unit
40: holding unit
100: electrode assembly
110: positive electrode piece
120: negative electrode piece
130: separator
150: negative electrode-separator assembly

## Claims

1. An electrode assembly manufacturing apparatus comprising:
a first electrode-separator assembly supply unit that supplies a first electrode-separator assembly including a plurality of first electrode pieces located between sheet-like separators facing each other,
a second electrode supply unit that supplies second electrode pieces laminated to be located on the outer side surface of the separator of the first electrode-separator assembly,
a stack unit on which an electrode assembly formed by laminating the first electrode-separator assembly and the second electrode piece is seated, and
a holding unit that holds the second electrode piece from the second electrode supply unit and moves the second electrode piece.

2. The electrode assembly manufacturing apparatus as claimed in claim 1, wherein:
the second electrode supply unit includes a 2-1 st electrode supply unit and a 2-2nd electrode supply unit, and
the stack unit is disposed between the 2-1st electrode supply unit and the 2-2nd electrode supply unit.

3. The electrode assembly manufacturing apparatus as claimed in claim 2, wherein:
the stack unit moves between the 2-1 st electrode supply unit and the 2-2nd electrode supply unit.

4. The electrode assembly manufacturing apparatus as claimed in claim 3, wherein:
the stack unit moves on a straight line that forms the shortest distance between the 2-1st electrode supply unit and the 2-2nd electrode supply unit.

5. The electrode assembly manufacturing apparatus as claimed in claim 1, wherein:
the holding unit moves between the second electrode supply unit and the stack unit.

6. The electrode assembly manufacturing apparatus as claimed in claim 1, wherein:
the holding unit holds the second electrode piece from the second electrode supply unit adjacent to the holding unit, and moves the held second electrode piece to the stack unit, and
the stack unit that has received transmission of the held second electrode piece moves in order to laminate the first electrode-separator assembly on the stack unit.

7. The electrode assembly manufacturing apparatus as claimed in claim 6, wherein:
the stack unit moves to be adjacent to the second electrode supply unit that is located farther from the stack unit among a plurality of second electrode supply units in order to laminate the first electrode-separator assembly, and
the stack unit is moved to be adjacent to the second electrode supply unit to thereby locate the first electrode-separator assembly on the uppermost second electrode piece of the stack unit.

8. The electrode assembly manufacturing apparatus as claimed in claim 6, wherein:
the first electrode-separator assembly is in a state in which the first electrode piece is laminated between the sheet-like separators.

9. The electrode assembly manufacturing apparatus as claimed in claim 6, wherein:
the first electrode is a negative electrode, and the second electrode is a positive electrode.

10. A manufacturing method of an electrode assembly, comprising the steps of:
forming a first electrode-separator assembly that includes two sheet-like separators, and a plurality of first electrode pieces continuously located between inner side surfaces of the sheet-like separators facing each other;
disposing the first electrode-separator assembly in a stack unit;
laminating a second electrode piece on the outer side surface of the separator of the first electrode-separator assembly disposed in the stack unit; and
allowing the stack unit to move and laminating the first electrode-separator assembly on the laminated second electrode piece.

11. The manufacturing method of an electrode assembly as claimed in claim 10, wherein:
the step of laminating a second electrode piece on the outer side surface of the separator of the first electrode-separator assembly disposed in the stack unit is,
a step in which a holding unit holds a second electrode piece from a second electrode supply unit, and the held second electrode piece is laminated on the first electrode-separator assembly disposed in the stack unit.

12. The manufacturing method of an electrode assembly as claimed in claim 10, wherein:
the stack unit is located between the 2-1st electrode supply unit and the 2-2nd electrode supply unit.

13. The manufacturing method of an electrode assembly as claimed in claim 12, wherein:
the step of allowing the stack unit to move and laminating the first electrode-separator assembly on the laminated second electrode piece is,
a step in which the stack unit moves between the 2-1st electrode supply unit and the 2-2nd electrode supply unit, and the first electrode-separator assembly is laminated on the uppermost second electrode piece of the stack unit.

14. The manufacturing method of an electrode assembly as claimed in claim 10, wherein:
in the step of disposing the first electrode-separator assembly in the stack unit, the first electrode-separator assembly is in a state in which the first electrode piece is laminated between the sheet-like separators.

15. The manufacturing method of an electrode assembly as claimed in claim 10, wherein:
the first electrode is a negative electrode, and the second electrode is a positive electrode.
